# EUROPEAN PATENT SPECIFICATION

(11) **EP 4 727 008 B1**
(45) Date of publication and mention of the grant of the patent: **28.10.2026**
(21) Application number: 25207058.6
(22) Date of filing: 06.10.2025
(51) Int. Cl.: H02S 20/23

(54) **UNIVERSAL MOUNTING BRACKET FOR MOUNTING LARGE FLAT ELEMENTS ON ROOF SLOPES WITH A SEAM, ESPECIALLY PHOTOVOLTAIC PANELS**
UNIVERSELLE MONTAGEHALTERUNG ZUR BEFESTIGUNG VON GROSSEN FLÄCHENELEMENTEN AUF DACHSCHRÄGEN MIT FALZ, INSBESONDERE PHOTOVOLTAIKMODULEN
SUPPORT DE MONTAGE UNIVERSEL POUR LE MONTAGE DE GRANDS ELEMENTS PLATS SUR DES PENTES DE TOIT AVEC JOINT, EN PARTICULIER DES PANNEAUX PHOTOVOLTAÏQUES

(30) Priority: 10.10.2024 PL 45000524
(43) Date of publication of application: 15.04.2026
(73) Proprietor: Blachotrapez sp. z o.o., 34-700 Rabka Zdroj (PL)
(72) Inventor: LUBERDA, Renata, 34-700 Rabka-Zdroj (PL)
(74) Representative: Kicinska-Fujawa, Alicja

(56) References cited:
- EP-A1- 2 410 190
- US-A1- 2022 393 635
- US-B1- 10 749 459
- US-B2- 9 175 878

## Description

### Technical Field

The object of the invention is a universal bracket designed for fixing large-area flat components, especially photovoltaic panels, to seamed roof slopes.

From the description of the invention EP 2410190 A1, there is known a device for securing an object against a structural element having a framed hole on a slotted support or profile rail with a T-shaped groove, which has a U-shaped clamping element with resilient side legs which enter the hole in the assembled position, where the screw passes through the bump of the clamping element and can be screwed into the hole, having internal threading, against the strut element.

Patent description EP 2662645B1 discloses a solar module holder for clamp holding a solar module, which has a base holder fixed in place, an intermediate member and a clamping holder, the clamping surface of the clamping holder forming a holding clamp for the solar module with the mating clamping surface of the base holder and the clamping holder being operatively connected to the intermediate member via a screw connection having a pivot axis. US 9 175 878 B2 discloses a solar panel holder.

The aim of the invention is to provide a universal bracket for fixing flat elements with large surface areas, especially photovoltaic panels, on seamed roof slopes, which is distinguished by its simple and convenient installation providing a secure and permanent detachable connection between the flat elements and the roof slope.

The essence of the universal bracket for fixing large-area flat components, especially photovoltaic panels, to seamed roof slopes is that the bracket consists of several detachable components comprising a body, at least one cap and a clamping element. All parts of the holder according to the invention are connected in a simple manner, where first the body is seated on the seam of the roof slope and fixed by means of a screw pre-screwed to the body, then at least one overlay is placed on the body, in the next step the photovoltaic panel is seated in such a way that the outer edge of the photovoltaic panel is in contact with the surface of both arms of the overlay, or one arm of the overlay, when the panel is fixed on the edge of the roof slope, and then a clamping element is applied, which is pressed by screws onto the surface of the overlay arms so that a flat element with a large surface area, such as a photovoltaic panel, is permanently and detachably mounted on the roof slope.

### Brief Description of Drawings

The universal holder is shown in the accompanying drawing, where:
[Fig.1] shows the first variant of the universal holder in axonometric view;
[Fig.2] shows the first variant of the universal holder in the side view;

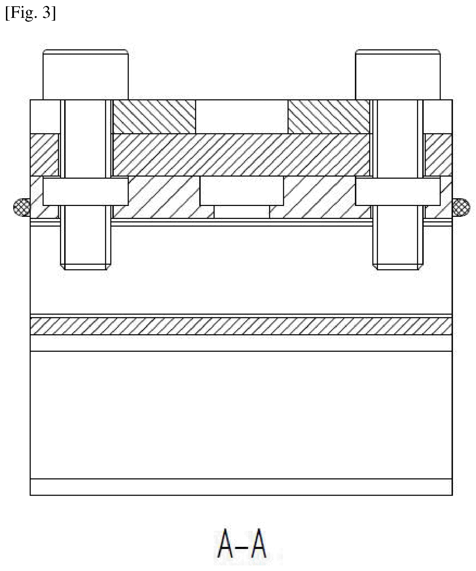

[Fig.3] shows the first variant of the universal holder in the cross-section;
[Fig.4] shows the first variant of the universal holder in perspective view;
[Fig.5] shows the second variant of the universal holder in axonometric view;
[Fig.6] shows the second variant of the universal holder in the side view;

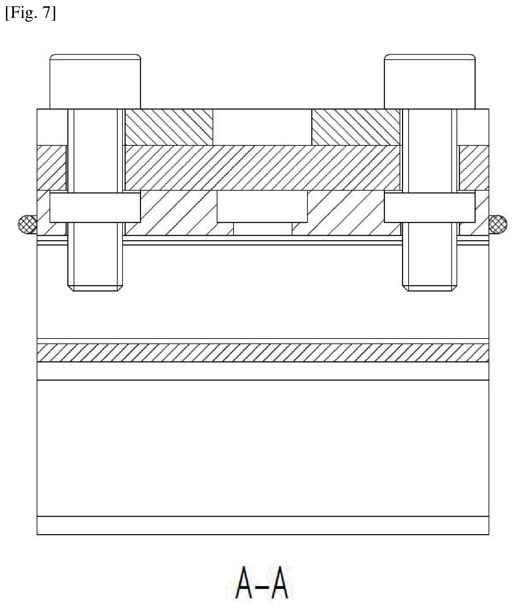

[Fig.7] shows the second variant of the universal holder in cross-section;
[Fig.8] shows the second variant of the universal holder in perspective view;

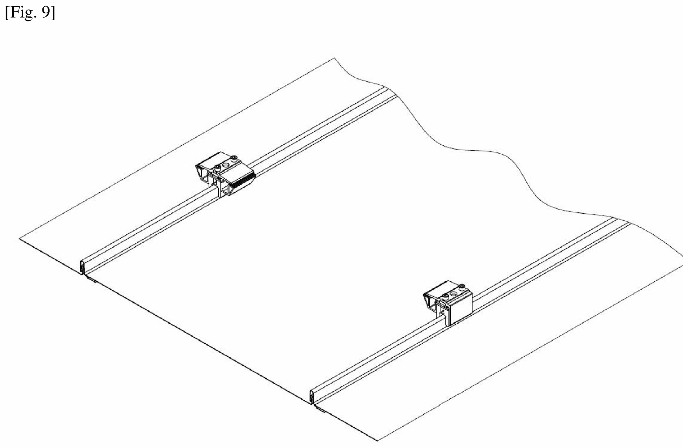

[Fig.9] shows the fixing of both variants of the universal holder on the roof slope.

### Description of Embodiments

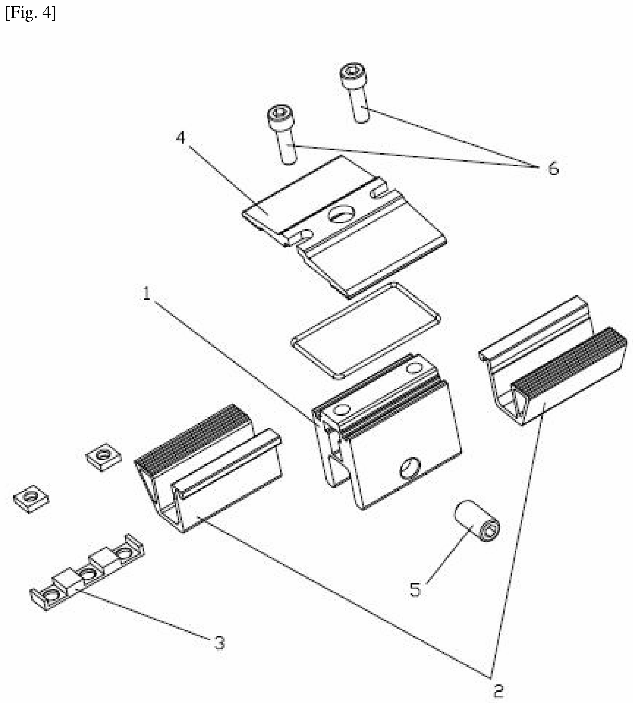

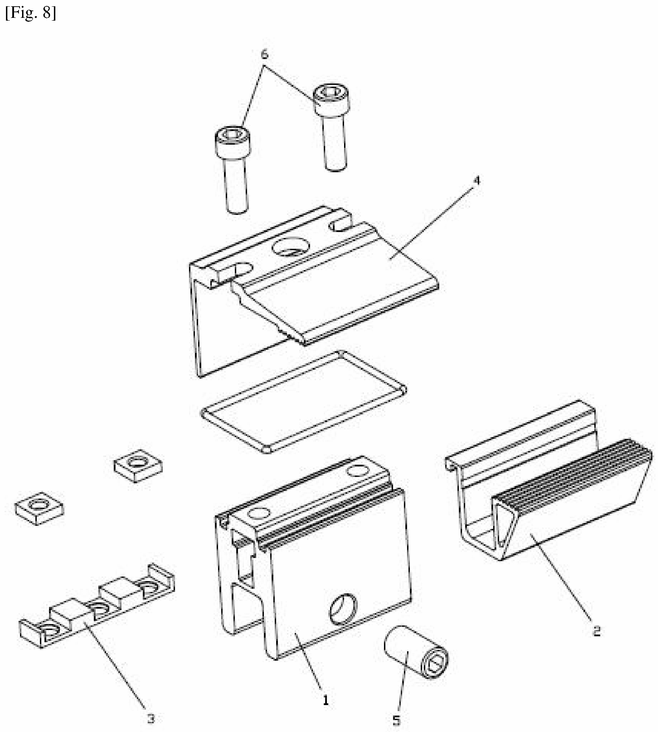

The universal chuck according to the invention consists of several detachable elements ([Fig.4], [Fig.8]) comprising a body 1, at least one cap 2 and a clamping element 4. The body 1 is H-shaped, the lower arms of which form a rectangular protrusion, where one of the lower arms is fitted with a socket for a screw 5 with which the body is fixed to the roof seam. The upper arms of the body 1 are connected to each other in such a way that the edges of the upper arms are free and form grooves and in the central part between the arms of the body 1 there is a rectangular finial with holes, extending above the edges of the upper arms and in the central part between the arms of the body 1 there is a T-shaped hole, where an adapter 3 with nuts is placed, the holes in the finial of the body 1 corresponding to the holes in the adapter 3 and being designed for fixing at least one cap 2 with screws 6.

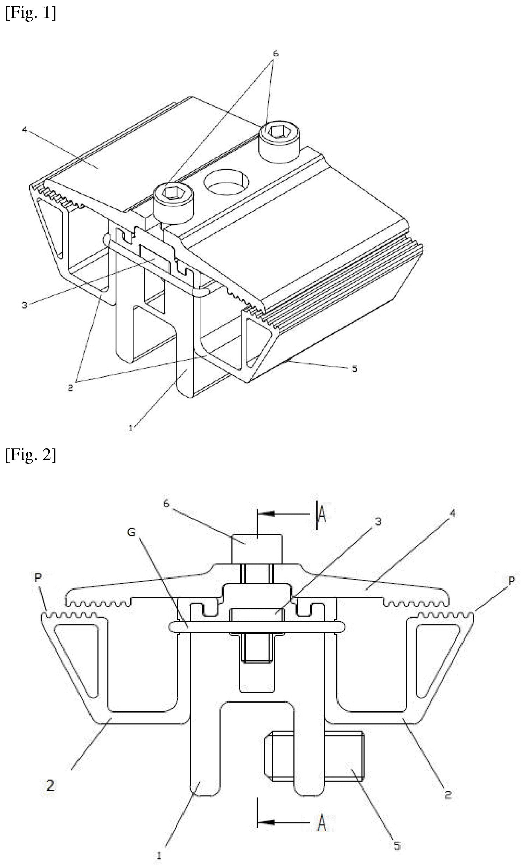

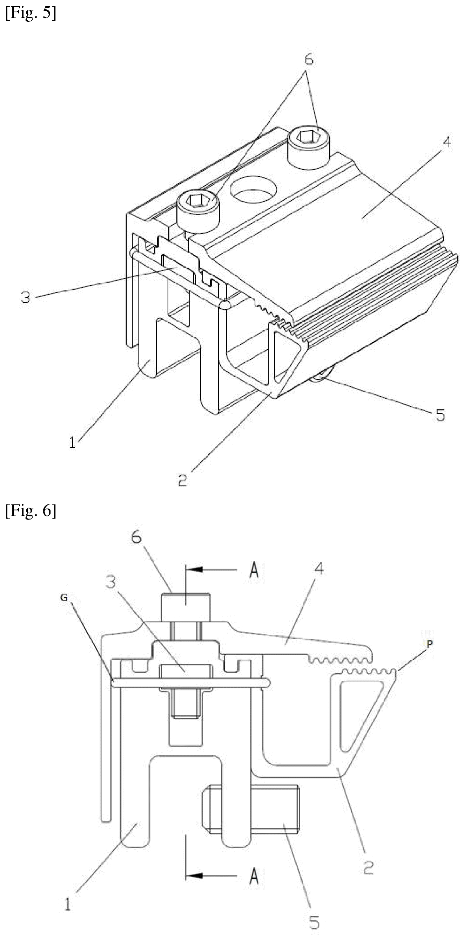

Universal handle cap 2 ([Fig.2], [Fig.6]) is U-shaped, the first arm of which has its edge turned outwards to form a bend matching in size the height of the groove formed by the edge of the upper body arm 1, so that the cap 2 is hooked into the groove of the edge of the upper body arm 1 along its entire length. Furthermore, the second arm of the overlay 2 is turned inwards in such a way that with the vertical part of the second arm it forms a hole of rectangular triangle shape, the base of which is located in the upper part of the overlay and forms a support P for fixing the photovoltaic panel, the outer surface of the base of the support P having longitudinal grooves forming a serrated surface preventing free movement of the panel. In addition, on the inside of the first arm of cap 2, opposite the second arm, at the level of support P, there is a bump, intended for rubber band G.

Clamping element 4 of the universal holder is made as a single piece with a trapezoidal shape, which can be in two variants.

In one variant of the solution according to the invention, designed for fixing the panels on both sides of the universal holder ([Fig.1], [Fig.2]), on the body 1 the pads 2 are fixed on both sides and the supports P form a symmetrical support for the panels on both sides, then the clamping element 4 has symmetrically shaped arms of a triangular shape, where the lower surfaces of the triangular arms of the clamping element 4 have longitudinal grooves forming a serrated surface on the surfaces tangent to the surfaces of the supports P of the pads 2, thereby preventing free movement of the panels, the clamping element 4 in the central part having a rectangular finial connecting the two arms of the clamping element 4 and, furthermore, the finial has holes or recesses, the arrangement of which corresponds to the holes of the adapter 3.

In the second variant of the solution according to the invention, designed to fix the panel at the edge of the roof slope ([Fig.5], [Fig.6]), on one side of the universal holder, on the body 1 there is unilaterally fixed an overlay 2, whose support P provides unilateral support for the outermost edge of the panel, then the clamping element 4 has one arm of triangular shape, where the lower surface of the triangular arm of the clamping element 4 has longitudinal grooves forming a serrated surface on the surface tangent to the surface of one of the supports of the overlay (2) or (2a), thereby preventing free movement of the panel, and the second arm of the pressure element 4 has an inverted L-shape, the longer side of which faces vertically downwards and has a smooth surface, and furthermore the pressure element 4 in the central part has a rectangular finial connecting the two arms of the pressure element 4, the finial having holes or recesses whose arrangement corresponds to the holes of the adapter 3.

In order to fix the photovoltaic panels using the universal bracket according to the invention, the universal bracket can already be pre-assembled, which makes assembly easier and faster. In this case, an adapter 3 with rectangular caps is placed in the hole in the body 1 and a pre-drilled screw is fixed in the socket 5 and, depending on the position of fixing on the roof slope, whether the panels are fixed on both sides of the roof slope or in the extreme position, two or one cap 2 are placed on the body 1 by hooking the outward-facing edge of the cap 2 into the groove formed by the edge of the upper arm of the body 1 and the whole, i.e. the body 1 with two or one cap 2 fixed on it, is bound with the rubber band G.

The thus pre-assembled parts of the universal bracket according to the invention are seated on the roof seam and fixed by tightening the screw in socket 5. In the next step, a photovoltaic panel, for example, is placed on the support of the overlay 2 so that the surface of the support of the overlay 2 is in direct contact with the edge of the panel and a pressure element 4 is applied from above, with which the edge of the panel is pressed against the overlay 2. Due to the fact that the body 1 has an adapter with rectangular caps, and that the holes of the finial of the clamping element 4 are aligned with the position of the caps located in the adapter placed in the body 1, the operator fixing the photovoltaic panel screws into the holes of the clamping element 4 with the screws 6 alone, which significantly saves time for assembly and is more convenient for the assembler.

Optionally, rubber pads can be inserted between the support of the overlay 2 and the panel, although this is not required for a permanent and secure installation, as the grooves on the surfaces of the support P of the overlay 2 and the fixing element 4, tangent to the surface of the element to be fixed, are serrated, so that the element to be fixed is permanently and detachably mounted on the roof slope.

The solution according to the invention envisages that the universal bracket can also be used to mount panels located at the ends of the roof slopes. For this purpose, a pre-assembled universal holder comprising a body 1 and one cap 2 bound by a rubber band is used and the assembly of the panel is carried out as described above, whereby an edge photovoltaic panel is placed on the support P of the cap 2, so that the surface of the support P is in direct contact with the edge of the panel and the whole is pressed down by the pressure element 4, with the arm of the pressure element 4 of a triangular shape in contact with the edge of the panel and the other arm of the pressure element 4 adhering longitudinally to the wall of the universal body 1 forming a cover for the outer surface of the body 1.

Thanks to the modular design of the universal bracket, the solution according to the invention can be used for mounting on many types of roofing materials having seam of different thicknesses, for fixing flat elements with large surfaces, especially such as photovoltaic panels. The mounted universal handles for both variants of the solution according to the invention are shown in [Fig.8].

Because they use common elements such as body 1 with adapter 3, bracket 2, irrespective of the solution variant, the cost of their use is significantly lower than if dedicated solution variants were required depending on the position on the roof of the component to be fixed. In addition, the handle's modular design means that the handle can be easily dismantled and individual components can be replaced, so it is a solution conforming to sustainable development concept.

Furthermore, the shape of cap 2 provides greater rigidity to this component and the serrated contact surface between the support and the component being clamped increases the clamping force and provides the possibility of clamping components with different textures, not just components with smooth surfaces.

In addition, the width between the body arms can be adapted to the width of the roof seam or other distal roofing element. Because the universal body is H-shaped and the movable fixing element is a screw, the bracket retains its rigidity without being subject to deformation, for example as a result of internal stresses caused by temperature differences, and ensures secure fastening to the distal roofing component.

The shape of the clamping element 4, whose rectangular shoulder finial is thickened relative to the cross-section of the arms, also ensures that the holes or recesses therein for the fastening screws do not weaken the rigidity of the clamping element 4 as a whole and provide secure and strong clamping of the workpiece to be clamped. Once the screw is tightened, an extremely strong and secure connection of all components is achieved.

In addition to this, the solution according to the invention provides a simple way of fixing flat elements on the roof slope, such as photovoltaic panels, which means that only one fitter is needed for installation, so the use of the solution according to the invention is also economically viable for the investor.

Advantageously, the universal holder according to the invention is made of a weatherproof and corrosion-resistant material, for example aluminium.

Advantageously, in the universal holder according to the invention, the clamping element 4 is coated with a UV-resistant coating, for example in black, so that the attachment points of the photovoltaic panels are masked and the aesthetics of the installation are improved.

## Claims

1. A universal bracket for fixing large-area flat elements, especially photovoltaic panels, to seamed roof slopes, consisting of several detachable elements comprising a body, a cap and a clamping element, wherein:
a. a body (1) having the shape of an H-letter, the lower arms of which form a rectangular projection, where one of the lower arms is provided with a socket for a screw (5), by means of which the body is fixed to the roof seam, and the upper arms of the body (1) are connected to each other in such a way that the edges of the upper arms are free and form grooves, and in the central part between the arms of the body (1) there is a rectangular finial with holes protruding above the edges of the upper arms of the body (1), and in the middle part between the arms of the body (1) there is a T-shaped hole, where an adapter (3) with nuts is placed, and
b. at least one cap (2) having an U-shape, the first arm of which has an outward-facing edge forming a fold matching in size to the height of the groove formed by the edge of the upper body (1) arm, which is designed to hook the cap (2) on the groove of the edge of the upper body (1) arm along its entire length, while the second arm of the cap (2) is turned inside in such a way that it forms a hole with the vertical part of the second arm in the shape of a rectangular triangle-shaped hole, the base of which is in the upper part of the cap and forms a support (P) for the attachment of the photovoltaic panel, the outer surface of the base of the support (P) having longitudinal grooves forming a serrated surface and, optionally, on the inner side of the first arm of the cap (2), opposite to the second arm, at the height of the support (P) there is a recess, intended for a rubber band (G) , and
c. a trapezoidal shaped clamping element (4) which
i. - has symmetrical triangular shaped arms, where the lower surfaces of the triangular arms of the clamping element (4) have longitudinal grooves on surfaces tangent to the support surfaces (P) of the caps (2), or
ii. - has one arm of triangular shape, where the lower surface of the triangular arm of the clamping element (4) has longitudinal grooves on the surface tangent to the surface of the cap (2) support, and the other arm of the clamping element (4) has an inverted L-shape, the longer side of which faces vertically downwards and has a smooth surface, and the clamping element (4) in the central part has a rectangular finial connecting the two arms of the clamping element (4), the finial having holes or recesses, the positioning of which corresponds to that of the holes of the adapter (3), and they are designed to connect the clamping element (4) to the photovoltaic panel and the cap (2) by means of screws (6).

2. Universal holder according to claim 1, wherein the adapter (3) has rectangular nuts.

3. Universal holder according to any of the preceding claims, wherein it is pre-assembled prior to assembly, wherein the outwardly turned edge of at least one cap (2) is hooked into a groove formed by the edge of the upper body (1) arm and the whole is bound by a rubber band (G).

4. The universal holder according to any of the preceding claims, wherein it is made of weatherproof and corrosion resistant material.

5. Universal holder according to any of the preceding claims, wherein the outer surface of the clamping element (4) is coated with an additional UV-resistant coating.

## Patentansprüche

1. Eine Universalhalterung zur Befestigung großformatiger flacher Bauteile, insbesondere von Photovoltaikmodulen, an Stehfalzdächern, bestehend aus mehreren demontierbaren Elementen, die jeweils aus einem Grundkörper, einer Kappe und einem Spannelement bestehen, wobei:
a. der Grundkörper (1) eine Form des H-Buchstaben aufweist und dessen Unterarme einen rechteckigen Vorsprung bilden, wobei einer der Unterarme mit einer Aufnahme für eine Schraube (5) versehen ist, mit derer Hilfe der Grundkörper am Dachfalz befestigt wird, und die oberen Oberarme des Grundkörpers (1) miteinander so verbunden sind, dass die Kanten der Oberarme frei liegen und Nuten bilden, und im mittleren Bereich zwischen den Armen des Grundkörpers (1) ein rechteckiger Abschluss mit Löchern vorhanden ist, der über die Kanten der Oberarme des Grundkörpers (1) hinausragt, und im mittleren Bereich zwischen den Armen des Grundkörpers (1) sich eine T-förmige Öffnung befindet, in die ein Adapter (3) mit Muttern eingesetzt wird, und
b. mindestens eine Kappe (2) in Form des U-Buchstaben aufweist, deren erster Arm eine nach außen gerichtete Kante aufweist, die eine Falte bildet, deren Größe der Höhe der durch die Kante des Oberarms des Grundkörpers (1) gebildeten Nut entspricht, und die dazu ausgelegt ist, die Kappe (2) entlang ihrer gesamten Länge in die Nut der Kante des Oberarms des Grundkörper (1) einzuhaken, während der zweite Arm der Kappe (2) so nach innen gebogen ist, dass er zusammen mit dem vertikalen Teil des zweiten Arms ein Loch in Form eines rechtwinkligen Dreiecks bildet, dessen Basis sich im oberen Teil der Kappe befindet und eine Abstützung (P) zur Befestigung des Photovoltaikmoduls bildet, wobei die Außenfläche der Basis der Abstützung (P) Längsrillen aufweist, die eine gezahnte Oberfläche bilden, und optional auf der Innenseite des ersten Arms der Kappe (2), gegenüber dem zweiten Arm, in Höhe der Abstützung (P) eine Aussparung vorhanden ist, die für ein Gummiband (G) vorgesehen ist, und
c. ein trapezförmiges Spannelement (4), das
i. - symmetrische, dreieckförmige Arme aufweist, wobei die Unterseiten der dreieckförmigen Arme des Klemmelements (4) Längsnuten an den Flächen aufweisen, die tangential zu den Flächen der Abstützung (P) der Kappen (2) verlaufen, oder
ii. - einen dreieckförmigen Arm aufweist, wobei die Unterseite des dreieckigen Arms des Klemmelements (4) Längsnuten auf der Oberfläche aufweist, die tangential zur Oberfläche der Kappe (2) verläuft, und der andere Arm des Spannelements (4) eine umgekehrte L-Form aufweist, dessen längere Seite senkrecht nach unten zeigt und eine glatte Oberfläche aufweist, und das Spannelement (4) im mittleren Bereich einen rechteckigen Abschluss aufweist, der die beiden Arme des Spannelements (4) verbindet, wobei der Abschluss Löcher oder Aussparungen aufweist, deren Anordnung den Löchern im Adapter (3) entspricht, und die dazu dienen, das Spannelement (4) mittels Schrauben (6) mit dem Photovoltaikmodul und der Kappe (2) zu verbinden.

2. Eine Universalhalterung nach Anspruch 1, wobei der Adapter (3) rechteckige Muttern aufweist.

3. Eine Universalhalterung nach einem der vorangehenden Ansprüche, wobei diese vor der Montage vormontiert wird, wobei die nach außen gebogene Kante mindestens einer Kappe (2) in eine Nut eingehängt wird, die durch die Kante des Oberarms des Grundkörpers (1) gebildet wird, und das Ganze mit einem Gummiband (G) zusammengehalten wird.

4. Eine Universalhalterung nach einem der vorangehenden Ansprüche, wobei sie aus wetterfestem und korrosionsbeständigem Material besteht.

5. Eine Universalhalterung nach einem der vorangehenden Ansprüche, wobei die Außenfläche des Spannelements (4) mit einer zusätzlichen UV-beständigen Beschichtung versehen ist.

## Revendications

1. Support universel destiné à fixer des éléments plats de grande surface, notamment des panneaux photovoltaïques, sur des versants de toiture à joints debout, constitué de plusieurs éléments amovibles comprenant un corps, un capuchon et un élément de serrage, dans lequel :
a. un corps (1) en forme de lettre H, dont les bras inférieurs forment une saillie rectangulaire, l'un des bras inférieurs étant pourvu d'un logement destiné à recevoir une vis (5), au moyen de laquelle le corps est fixé au joint de toiture, et les bras supérieurs du corps (1) étant reliés l'un à l'autre de telle sorte que les bords des bras supérieurs sont libres et forment des rainures, une partie terminale rectangulaire pourvue de trous faisant saillie au-dessus des bords des bras supérieurs du corps (1) étant disposée dans la partie centrale entre les bras du corps (1), et un trou en forme de T, dans lequel est placé un adaptateur (3) avec des écrous, étant ménagé dans la partie médiane entre les bras du corps (1), et
b. au moins un capuchon (2) en forme de U, dont le premier bras présente un bord orienté vers l'extérieur formant un pli dont la dimension correspond à la hauteur de la rainure formée par le bord du bras supérieur du corps (1), ledit pli étant conçu pour accrocher le capuchon (2) dans la rainure du bord du bras supérieur du corps (1) sur toute sa longueur, tandis que le second bras du capuchon (2) est replié vers l'intérieur de manière à former, avec la partie verticale du second bras, un évidement ayant la forme d'un triangle rectangle, dont la base est située dans la partie supérieure du capuchon et forme un support (P) destiné à la fixation du panneau photovoltaïque, la surface extérieure de la base du support (P) présentant des rainures longitudinales formant une surface dentelée et, facultativement, un renfoncement destiné à recevoir une bande en caoutchouc (G) étant ménagé sur la face intérieure du premier bras du capuchon (2), à l'opposé du second bras, à la hauteur du support (P), et
c. un élément de serrage (4) de forme trapézoïdale qui
i. - comporte des bras symétriques de forme triangulaire, les surfaces inférieures des bras triangulaires de l'élément de serrage (4) présentant des rainures longitudinales sur les surfaces tangentes aux surfaces de support (P) des capuchons (2), ou
ii. - comporte un bras de forme triangulaire, la surface inférieure du bras triangulaire de l'élément de serrage (4) présentant des rainures longitudinales sur la surface tangente à la surface de support (P) du capuchon (2), tandis que l'autre bras de l'élément de serrage (4) présente une forme de L inversé, dont le côté le plus long est orienté verticalement vers le bas et présente une surface lisse, et l'élément de serrage (4) comportant, dans sa partie centrale, une partie terminale rectangulaire reliant les deux bras de l'élément de serrage (4), ladite partie terminale présentant des trous ou des évidements dont la disposition correspond à celle des trous de l'adaptateur (3), lesdits trous ou évidements étant conçus pour relier l'élément de serrage (4) au panneau photovoltaïque et au capuchon (2) au moyen de vis (6).

2. Support universel selon la revendication 1, dans lequel l'adaptateur (3) comporte des écrous rectangulaires.

3. Support universel selon l'une quelconque des revendications précédentes, dans lequel il est préassemblé avant le montage, le bord orienté vers l'extérieur d'au moins un capuchon (2) étant accroché dans une rainure formée par le bord du bras supérieur du corps (1), et l'ensemble étant maintenu par une bande en caoutchouc (G).

4. Support universel selon l'une quelconque des revendications précédentes, dans lequel il est réalisé en un matériau résistant aux intempéries et à la corrosion.

5. Support universel selon l'une quelconque des revendications précédentes, dans lequel la surface extérieure de l'élément de serrage (4) est revêtue d'un revêtement supplémentaire résistant aux rayons UV.
